Europäisches Patentamt

European Patent Office

Office européen des brevets

(11) Veröffentlichungsnummer: **0 233 580 B1**

(12) **EUROPÄISCHE PATENTSCHRIFT**

(45) Veröffentlichungstag der Patentschrift: **15.05.91**

(21) Anmeldenummer: **87101850.3**

(22) Anmeldetag: **10.02.87**

(51) Int. Cl.5: **F41G 3/22, G05D 3/14**

(54) **Anordnung zum Driftabgleich eines kreiselstabilisierten Rundblickperiskops.**

(30) Priorität: **15.02.86 DE 3604822**

(43) Veröffentlichungstag der Anmeldung:
**26.08.87 Patentblatt 87/35**

(45) Bekanntmachung des Hinweises auf die
Patenterteilung:
**15.05.91 Patentblatt 91/20**

(84) Benannte Vertragsstaaten:
**CH DE IT LI NL**

(56) Entgegenhaltungen:
**FR-A- 2 480 932**

(73) Patentinhaber: **Firma Carl Zeiss**

**W-7920 Heidenheim (Brenz)(DE)**

(72) Erfinder: **Koch, Klaus**
**Buchenwaldstrasse 8**
**W-7022 Leinfelden(DE)**

## Beschreibung

Die Erfindung betrifft eine Anordnung zum Driftabgleich eines mit einer Richtachse versehenen kreiselstabilisierten Rundblickperiskops mit einem Stellmotor und einem Regler in einem Stabilisierungsregelkreis, einem während des Driftabgleichvorganges dem Stabilisierungsregelkreis überlagerten und eine elektronische Abgleichschaltung aufweisenden Driftabgleichregelkreis.

Gepanzerte Fahrzeuge sind zur Zielbeobachtung und Zielbekämpfung während der Fahrt mit Rundblickperiskopen ausgestattet, die ein Stabilisierungssystem zur Kompensation der Abweichung der Visierlinie von der Sollrichtung bei Fahrzeusbewegungen aufweisen. Die Visierlinie kann im Stabilisierungsbetrieb mit einem Richtgriff horizontal und vertikal geführt werden. Bei der Richtgriffstellung Null findet aber noch eine Restbewegung der Sichtlinie (Drift) statt, die während des Einsatzes des gepanzerten Fahrzeugs ständig auf Null abgeglichen werden muß. Bei bekannten Rundblickperiskopen dieser Art wird diese Drift dadurch auf Null abgeglichen, daß der Bediener des Periskops durch das Okular ein stehendes Ziel beobachtet und ein Abgleichpotentiometer solange verstellt, bis die durch die Strichmarke des Okulars dargestellte Visierlinie relativ zu diesem Ziel ihre Lage nicht mehr verändert. Zu diesem Zweck wird während des Driftabgleichvorganges dem Stabilisierungsregelkreis des Periskopes ein weiterer Regelkreis überlagert, der durch den Bediener des Periskops (Panzerkommandant) geschlossen wird. Der Driftabgleich ist eine zusätzliche Arbeitsbelastung für den Bediener, die ihn voll in Anspruch nimmt, so daß er während des Abgleichvorgangs keine weiteren Tätigkeiten ausführen kann.

Aus der DE-A- 3 015 311 ist eine Anordnung zum Driftabgleich eines Kreiselstabilisierten Rundblickperiskops mit einem Stellmotor in einem Stabilisierungsregelkreis und einem während des Driftabgleichvorganges dem Stabilisierungsregelkreis überlagerten Driftabgleichregelkreis bekannt, wobei eine elektronische Abgleichschaltung zur Schließung des Driftabgleichregelkreises vorgesehen ist. Dazu ist im Lageregelkreis ein Drehgeber nötig, und die Regelung funktioniert nicht mehr bei aufgetrenntem Stabilisierungskreis.

Der Erfindung liegt deshalb die Aufgabe zugrunde, den Panzerkommandanten von der zusätzlichen Arbeitsbelastung des Driftabgleichs zu befreien und eine elektronische Abgleichschaltung zur Schließung des Driftabgleichrelkreises anzugeben, die auch bei aufgetrennten Stabilisierungskreis funktioniert.

Diese Aufgabe wird erfindungsgemäß dadurch gelöst, daß in der elektronischen Abgleichschaltung Mittel zur Erfassung des Eingangsstromes des Stellmotors vorgesehen ist, daß am Ausgang des Mittels zur Erfassung des Eingangsstromes ein Tiefpaßfilter eingeschaltet ist, dessen Ausgang mit einer positiven und einer negativen vorgegebenen Schaltschwelle eines Komparators verglichen und einem ersten Eingang eines Auf-Abwärtszählers zugeführt wird, daß zur Erzeugung von Zählimpulsen der Komparator, ein Impulsgeber und ein Taktgenerator über eine Torschaltung mit einem zweiten Eingang des Auf-Abwärtszählers verbunden sind, und daß der Ausgang des Auf-Abwärtszählers über einen Analog/Digitalwandler den Eingang des Reglers aufgeschaltet wird.

In einem vorteilhaften Ausführungsbeispiel der Erfindung entspricht die Schaltschwelle des Komparators einem Stellmoment am Ausgang des Stellmotors, das unterhalb des minimalen Reibmoments der Lagerung der Richtachse liegt.

Die mit der Erfindung erzielten Vorteile bestehen insbesondere darin, daß sie bei einer Entlastung des Panzerkommandanten den Driftabgleich auch dann ermöglicht, wenn kein geeignetes Ziel vorhanden ist, beispielsweise bei Dunkelheit, Nebel oder bei verwischten Zielkonturen, was besonders bei Anwendungen in Flugabwehrsystemen vorkommen kann, und die außerdem auch bei aufgetrenntem Stabilisierungskreis funktioniert.

Ein Ausführungsbeispiel der Erfindung ist in der Zeichnung dargestellt und wird im folgenden näher beschrieben.

Fig. 1     zeigt das Blockschaltbild eines bekannten Stabilisierungsregelkreises mit Proportionalwendekreisel

Fig. 2     zeigt das Blockschaltbild der erfindungsgemäßen elektronischen Abgleichschaltung.

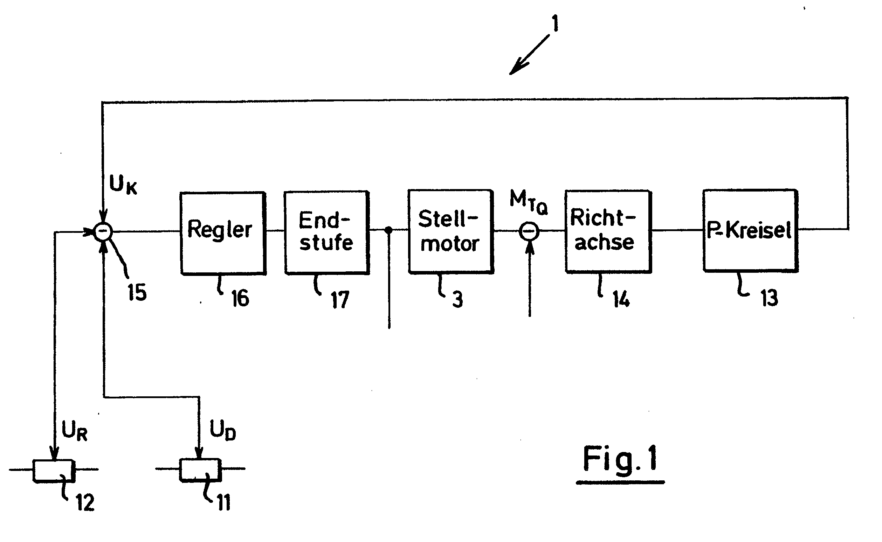

Im Stabilisierungsregelkreis (1) der Fig. 1 muß das Driftabgleichpotentiometer (11) derart eingestellt werden, daß die Restspannungen aus Richtgriff (12) und Proportionalwendekreisel (13) soweit kompensiert werden, daß der verbleibende Strom durch den Stellmotor (3) ein Restdrehmoment $M_{TQ}$ erzeugt, das kleiner ist als das Reibmoment $M_{Reib}$ der Lagerung der inertial stabilisierten Richtachse (14). Dadurch wird diese momentenfrei und führt gegenüber dem mit dem Trägerfahrzeug mechanisch starr verbundenen Periskopgehäuse keine weitere Verdrehung mehr aus. In der Darstellung der Fig. 1 führen das Kreiselsignal $U_K$, das Richtgriffsignal $U_R$ und das Driftabgleichsignal $U_D$ zu einem Summierpunkt (15), der über einen Regler (16) und die Endstufe (17) mit dem Stellmotor (3) verbunden ist. Diesem Stabilisierungregelkreis ist während des Driftabgleichvorganges ein weiterer Regelkreis überlagert, der durch den Bediener des Periskops über das Driftabgleichpotentiometer (11) geschlossen wird.

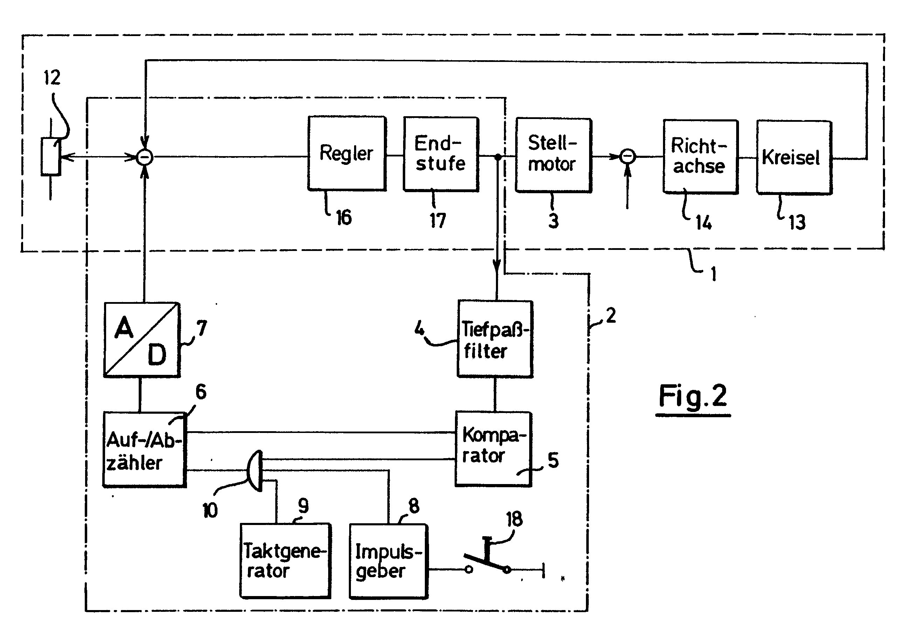

In der Darstellung der Fig. 2, welche die erfindungsgemäße elektronische Abgleichschaltung zur Schließung des Driftabgleichregelkreises darstellt, wird ein den Strom des Stellmotors (3) proportionales Signal über ein Tiefpaßfilter (4), das hochfrequente Stromkomponenten unterdrückt, einem Komparator (5) zugeführt, dessen positive und negative Schaltschwellen so eingestellt sind, daß sie einem Stellmotormoment entsprechen, das unterhalb des minimalen Reibmoments der Lagerung der Richtachse liegt. Je nachdem, ob die positive oder negative Schaltschwelle überschritten wird, wird der Zähler (6) durch den Komparator (5) auf Aufwärts- oder Abwärtszählen eingestellt, wodurch am Ausgang des Analog/Digitalwandlers (7) eine positive oder negative Spannung entstehen kann. Der Auf-Abwärtszähler erhält seine Zählimpulse aus einen Taktgenerator (9) über eine Torschaltung (10), die beispielsweise aus einem Und-Gatter besteht, und die dann geöffnet ist, wenn nach Betätigen des Auslösetasters (18) der Impulsgeber (8) einen Impuls abgibt, der länger sein muß, als die Zeit, die der Driftabgleichregelkreis zum Abgleich der Drift benötigt und der Komparator (5) festgestellt hat, daß eine der beiden Schaltschwellen überschritten ist. Die Ausgangsspannung des Analog/Digitalwand-lers (7) ändert sich derart, daß der Strom des Stellmotors (3) sich in Richtung der Schaltschwellen des Komparators (5) verändert. Wird eine der beiden Schaltschwellen erreicht, sperrt der Komparator (5) die Torschaltung (19), und der Abgleichvorgang ist beendet. Die Abgleichspannung ist durch den digitalen Zählerstand gespeichert. Die Stabilität des Driftabgleichregelkreises wird bei durch das Reibmoment $M_{Reib}$ vorgegebenen benen Schaltschwellen des Komparators (5) dadurch sichergestellt, stellt, daß eine maximale Frequenz des Taktgenerators (9) nicht überschritten wird. Es ist darauf zu achten, daß während des Driftabgleichvorganges der Richtgriff (12) in Nullstellung steht und das Trägerfahrzeug keine Drehbewegung um die stabilisierte Periskopachse ausführt.

## Ansprüche

1. Anordnung zum Driftabgleich eines mit einer Richtachse (14) versehenen kreiselstabilisierten Rundblickperiskops mit einem Stellmotor (3) und einem Regler (16) in einem Stabilisierungsregelkreis (1), einem während des Driftabgleichvorganges dem Stabilisierungsregelkreis (1) überlagerten und eine elektronische Abgleichschaltung (2) aufweisenden Driftabgleichregelkreis, dadurch gekennzeichnet, daß in der elektronischen Abgleichschaltung (2) Mittel zur Erfassung des Eingangsstromes des Stellmotors (3) vorgesehen ist, daß an Ausgang des Mittels zur Erfassung des Eingangsstromes ein Tiefpaßfilter (4) eingeschaltet ist, dessen Ausgang mit einer positiven und einer negativen vorgegebenen Schaltschwelle eines Komparators (5) verglichen und einem ersten Eingang eines Auf-Abwärtszählers (6) zugeführt wird, daß zur Erzeugung von Zählimpulsen der Komparator (5), ein Impulsgeber (8) und ein Taktgenerator (9) über eine Torschaltung (10) mit einem zweiten Eingang des Auf-Abwärtszählers (6) verbunden sind, und daß der Ausgang des Auf-Abwärtszählers (6) über einen Analog/Digitalwandler (7) dem Eingang des Reglers (16) aufgeschaltet wird.

2. Anordnung nach Anspruch 1, dadurch gekennzeichnet daß die Schaltschwelle des Komparators (5) einen Stellmoment am Ausgang des Stellmotors (3) entspricht, das unterhalb des minimalen Reibmoments der Lagerung der Richtachse (14) liegt.

## Claims

1. Arrangement for compensating the drift in a gyrostabilized panoramic periscope with a directional axis (14) using an adjusting motor (3) and a controller (16) in a stabilizing control circuit (1), a drift compensating control-circuit superposed on the stabilizing control circuit (1) during the drift compensation procedure and comprising an electronic compensating circuit (2), characterized by the fact that the electronic compensating circuit (2) provides means for measuring the input current of the adjusting motor (3), that a low-pass filter (4) is located at the output of said means for measuring the input current, that the filter output is compared with given positive and negative switching thresholds of a comparator (5) and is fed to the first input of an up/down counter (6), that, for the generation of counting pulses, the comparator (5), a pulse generator (8) and a clock oscillator (9) are connected to a second input of the up/down counter (6) via a gating circuit (10), and that the output of the up/down counter (6) is connected to the controller (16) via an analog/digital converter (7).

2. Arrangement according to claim 1, characterized by the fact that the switching threshold of the comparator (5) corresponds to a torque present at the output of the adjusting motor (3) which is below the minimal frictional torque of the mounting of the directional axis (14).

## Revendications

1. Dispositif de compensation de la dérive d'un périscope panoramique gyrostabilisé doté d'un axe de pointage (14), composé d'un moteur de positionnement (3) et d'un régulateur (16) réunis dans un circuit de stabilisation (1) et d'un circuit de compensation de la dérive qui est superposé au circuit de stabilisation (1) pendant le processus de compensation et qui comprend un circuit électronique d'équilibrage (2), caractérisé en ce que ledit circuit électronique d'équilibrage (2) comprend un moyen pour la saisis du courant d'entrée du moteur de positionnement (3), qu'un filtre passe-bas (4) est interposé à la sortie dudit moyen de saisie, dont le signal de sortie est comparée à des seuils positif et négatif de mise en marche d'un comparateur (5) et transmise à une première entrée d'un compteur bidirectionnel (6), que le comparateur (5), un générateur d'impulsions (8) et un synchroniseur (9) destinés à produire des impulsions de comptage sont reliés à une seconde entrée du compteur bidirectionnel (6) par l'intermédiaire d'un circuit porte (10) et que la sortie du compteur bidirectionnel (6) est connectée à l'entrée du régulateur (16) par un convertisseur analogique-numérique (7).

2. Dispositif selon la revendication 1, caractérisé en ce que le seuil de mise en marche du comparateur (5) correspond à un couple de commande à la sortie du moteur de positionnement (3), qui est inférieur au moment de frottement minimum exercé par la palier de l'axe de pointage (14).

Fig.1

Fig.2